# EUROPEAN PATENT SPECIFICATION

(11) **EP 4 132 749 B1**
(45) Date of publication and mention of the grant of the patent: **22.10.2025**
(21) Application number: 21784646.8
(22) Date of filing: 02.04.2021
(51) Int. Cl.: B25B 21/00, B23P 19/06, B25D 17/00, F16B 19/05, B25B 13/06, B25B 13/18, B25B 13/48

(54) **FASTENING SYSTEMS, FASTENING SYSTEM INSTALLATION APPARATUS, AND METHODS FOR FASTENING**
BEFESTIGUNGSSYSTEME, BEFESTIGUNGSSYSTEMINSTALLATIONSVORRICHTUNG UND BEFESTIGUNGSVERFAHREN
SYSTÈMES DE FIXATION, APPAREIL D'INSTALLATION DE SYSTÈME DE FIXATION, ET PROCÉDÉS DE FIXATION

(30) Priority: 07.04.2020 US 202063006288 P
(43) Date of publication of application: 15.02.2023
(73) Proprietor: Howmet Aerospace Inc., Pittsburgh, PA 15212-5858 (US)
(72) Inventor: WILCOX, Robert B., McGregor, TX 76657 (US)
(74) Representative: Forresters IP LLP
(86) International application number: PCT/US2021/025480
(87) International publication number: WO 2021/207008

(56) References cited:
- EP-A1- 1 980 342
- EP-A1- 1 980 342
- CN-U- 203 484 599
- JP-A- 2017 039 166
- US-A- 3 029 665
- US-A- 3 029 665
- US-A- 3 421 562
- US-A- 3 421 562
- US-A- 4 250 733

## Description

### FIELD OF USE

The present disclosure relates to fastening systems, fastening system installation apparatus, and methods for fastening.

### BACKGROUND

Vehicle frames, storage racks, solar panel sub-structures, aircraft components, and other structures can include numerous mechanical fasteners. For example, a pin of a fastener (e.g., a bolt, a structural fastener) can be installed in a bore of a structural component and secured by a fastening collar, such as, for example, a bolt collar and/or a nut. Securely installing a fastening collar onto a pin of a fastener can present challenges. US 4.250.733 discloses a fastening system for setting stump type swage fasteners. US 3,421,562 discloses a stressed structure and a method of obtaining a stressed structure.

None of these documents show a fastening system installation apparatus wherein each of the inner surfaces is substantially smooth and capable of applying substantially even pressure to the fastening collar.

### SUMMARY

According to the invention, a fastening system installation apparatus as defined by the features of claim 1 is provided.

Preferred embodiments are defined by the features of the dependent claims 1-14.

It will be understood that the inventions disclosed and described in this specification are not limited to the aspects above. The reader will appreciate the foregoing details, as well as others, upon considering the following detailed description of various non-limiting and non-exhaustive aspects according to the invention as defined by the claims.

### BRIEF DESCRIPTION OF THE DRAWINGS

The features and advantages of the examples, and the manner of attaining them, will become more apparent, and the examples will be better understood, by reference to the following description taken in conjunction with the accompanying drawings, wherein:
FIG. 1A is a perspective view of a non-limiting embodiment of a fastening system installation apparatus according to the present disclosure, shown in an open configuration;
FIG. 1B is a cross-sectional side view of the fastening system installation apparatus of FIG. 1A taken along line 1B-1B in FIG. 1A;
FIG. 1C is a cross-sectional side view of the fastening system installation apparatus of FIG. 1B, shown in a closed configuration;
FIG. 2 is a perspective view of a non-limiting embodiment of a fastening system according to the present disclosure;
FIG. 3A is a perspective view of a non-limiting embodiment of a fastening system installation apparatus and a non-limiting embodiment of a fastening system according to the present disclosure, shown prior to installation of the fastening system in a structure also illustrated in the figure;
FIG. 3B is a perspective view of the fastening system installation apparatus and fastening system of FIG. 3A, shown after installation of the fastening system into the structure;
FIG. 4A is a perspective view of a non-limiting embodiment of a fastening system installation apparatus according to the present disclosure;
FIG. 4B is a cross-sectional side view of the fastening system installation apparatus of FIG. 4A taken along line 4B-4B in FIG. 4A;
FIG. 5 is a perspective view of the fastening system installation apparatus of FIG. 4A, shown operatively coupled to an installation tool;
FIG. 6A is a cross-sectional side view of a non-limiting embodiment of a fastening system installation apparatus shown in an open configuration, a non-limiting embodiment of a fastening system according to the present disclosure, and a structure;
FIG. 6B is a cross-sectional side view of the fastening system installation apparatus and fastening system of FIG. 6A, shown after the fastening system has been received by an anvil cavity of the fastening system installation apparatus;
FIG. 6C is a cross-sectional side view of the fastening system installation apparatus and fastening system of FIG. 6B, shown after installation of the fastening system into the structure ;
FIG. 7A is a cross-sectional side view of a non-limiting embodiment of a fastening system according to the present disclosure, a non-limiting embodiment of a fastening system installation apparatus shown in a resting configuration, and a structure;
FIG. 7B is a cross-sectional side view of the fastening system installation apparatus and the fastening system of FIG. 7A, shown with the fastening system installation apparatus in a compressed configuration and the fastening system aligned with an anvil cavity of the fastening system installation apparatus;
FIG. 7C is a cross-sectional side view of the fastening system installation apparatus and the fastening system of FIG. 7B, shown in a configuration after a compressive force has been released from a first handle region and a second handle region;
FIG. 7D is a cross-sectional side view of the fastening system installation apparatus and the fastening system of FIG. 7C, shown in a configuration after the fastening system has been received by the anvil cavity of the fastening system installation apparatus and a radial force has been applied to the fastening collar; and
FIG. 7E is a cross-sectional side view of the fastening system installation apparatus and the fastening system of FIG. 7D, shown in a configuration after installation of the fastening system into the structure.

Corresponding reference characters indicate corresponding parts throughout the several views. The exemplifications set out herein illustrate certain non-limiting embodiments, in one form, and such exemplifications are not to be construed as limiting the scope of the appended claims in any manner.

### DETAILED DESCRIPTION OF NON-LIMITING EMBODIMENTS

Various examples are described and illustrated herein to provide an overall understanding of the structure, function, and use of the disclosed apparatus and methods. The various examples described and illustrated herein are non-limiting and non-exhaustive. Thus, the invention is not limited by the description of the various non-limiting and non-exhaustive examples disclosed herein. Rather, the invention is defined solely by the claims. The features and characteristics illustrated and/or described in connection with various examples may be combined with the features and characteristics of other examples. Such modifications and variations are intended to be included within the scope of the present disclosure. As such, the claims may be amended to recite any features or characteristics expressly or inherently described in, or otherwise expressly or inherently supported by, the present disclosure. Further, Applicant reserves the right to amend the claims to affirmatively disclaim features or characteristics that may be present in the prior art. The various non-limiting embodiments disclosed and described in the present disclosure can comprise, consist of, or consist essentially of the features and characteristics as variously described herein.

Any references herein to "various embodiments," "some embodiments," "one embodiment," "an embodiment," or like phrases mean that a particular feature, structure, or characteristic described in connection with the example is included in at least one embodiment. Thus, appearances of the phrases "in various embodiments," "in some embodiments," "in one embodiment," "in an embodiment," or like phrases in the specification do not necessarily refer to the same non-limiting embodiment. Furthermore, the particular described features, structures, or characteristics may be combined in any suitable manner in one or more non-limiting embodiments. Thus, the particular features, structures, or characteristics illustrated or described in connection with one non-limiting embodiment may be combined, in whole or in part, with the features, structures, or characteristics of one or more other non-limiting embodiments without limitation. Such modifications and variations are intended to be included within the scope of the present non-limiting embodiments.

In the present disclosure, unless otherwise indicated, all numerical parameters are to be understood as being prefaced and modified in all instances by the term "about," in which the numerical parameters possess the inherent variability characteristic of the underlying measurement techniques used to determine the numerical value of the parameter. At the very least, and not as an attempt to limit the application of the doctrine of equivalents to the scope of the claims, each numerical parameter described herein should at least be construed in light of the number of reported significant digits and by applying ordinary rounding techniques.

Also, any numerical range recited herein includes all sub-ranges subsumed within the recited range. For example, a range of "1 to 10" includes all sub-ranges between (and including) the recited minimum value of 1 and the recited maximum value of 10, that is, having a minimum value equal to or greater than 1 and a maximum value equal to or less than 10. Any maximum numerical limitation recited in this specification is intended to include all lower numerical limitations subsumed therein, and any minimum numerical limitation recited in the present disclosure is intended to include all higher numerical limitations subsumed therein. Accordingly, Applicant reserves the right to amend the present disclosure, including the claims, to expressly recite any sub-range subsumed within the ranges expressly recited. All such ranges are inherently described in the present disclosure.

The grammatical articles "a," "an," and "the," as used herein, are intended to include "at least one" or "one or more," unless otherwise indicated, even if "at least one" or "one or more" is expressly used in certain instances. Thus, the foregoing grammatical articles are used herein to refer to one or more than one (i.e., to "at least one") of the particular identified elements. Further, the use of a singular noun includes the plural, and the use of a plural noun includes the singular, unless the context of the usage requires otherwise.

As used herein, "intermediate" means that the referenced element is disposed between two elements but is not necessarily in contact with those elements. Accordingly, unless stated otherwise herein, an element that is "intermediate" a first element and a second element may or may not be adjacent to or in contact with the first and/or second elements, and other elements may be disposed between the intermediate element and the first and/or second elements.

Lockbolt fastening systems typically have a predetermined pin height and a predetermined fastening collar height such that a desired engagement length between a fastening system installation tool and the lockbolt can be achieved. Additionally, the amount of force applied to the lockbolt fastening system can affect the clamp force achieved during installation of the lockbolt fastening systems into a structure. For example, typically a pull section of a pin of a lockbolt fastening system can be engaged by a collet of a fastening system installation tool. Retracting the collet of the fastening system installation tool can urge the fastening collar of the lockbolt fastening system to contact a fixed shaped anvil of the fastening system installation tool. The contact can deform the fastening collar onto the pin. The amount of deformation can affect the clamp force achieved during installation, and the amount of deformation can be dependent on the amount of force applied to the pull section of the lockbolt fastening system. In various non-limiting embodiments, the amount of force that needs to be applied to achieve sufficient deformation may require a larger pin height and/or fastening collar height than desired.

Additionally, stump type lockbolt fastening systems are installed by solely applying an axial force to the fastening collar of the stump type lockbolt fastening system by a fixed shaped anvil. The axial force applied to the stump type lockbolt may not deform the lockbolt to a desired level and/or achieve a desired clamp force.

Thus, the present disclosure provides non-limiting embodiments of fastening systems, fastening system installation apparatus, and methods of fastening that may reduce the pin height and fastening collar height while allowing the installation apparatus to exert a sufficient clamping force upon installation of the fastening system into the structure.

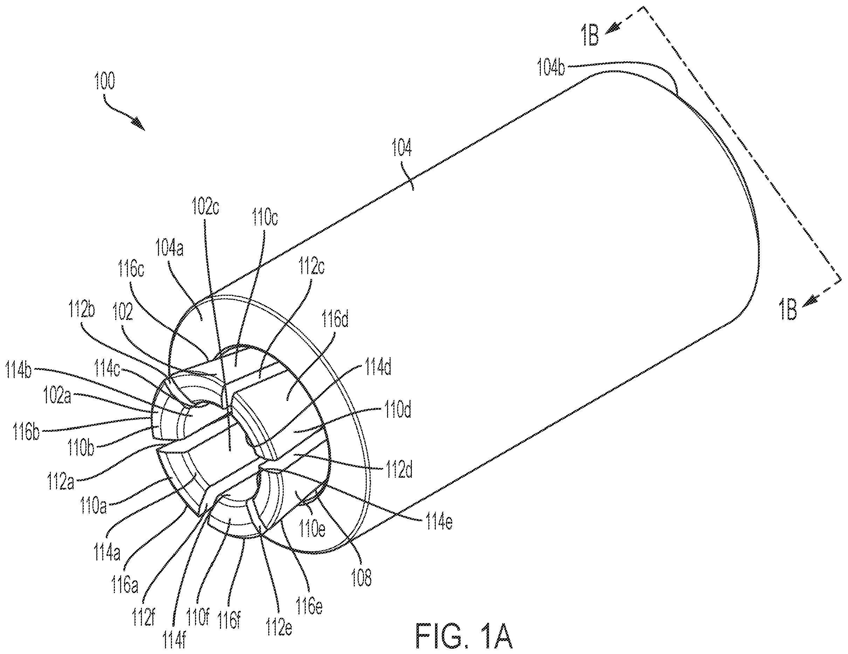

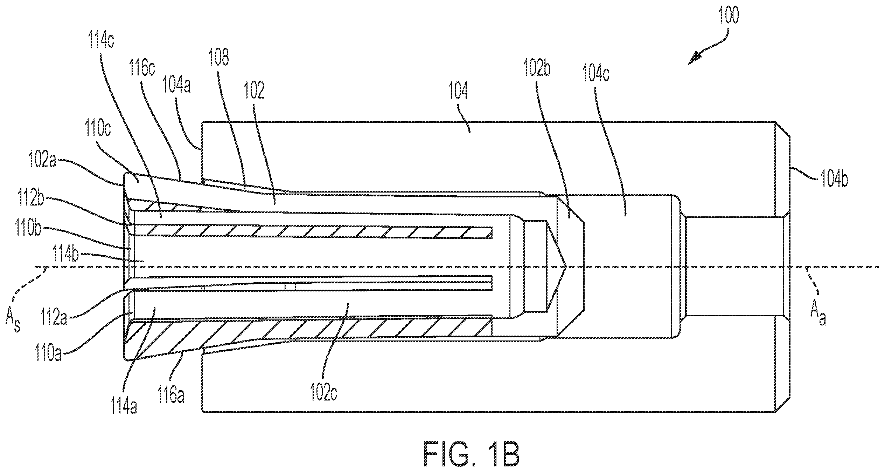

FIGs. 1A and 1B illustrate a non-limiting embodiment of fastening system installation apparatus 100 according to the present disclosure. The fastening system installation apparatus 100 can engage at least a portion of a fastening system (e.g., a fastening collar) and deform a portion of the fastening system (e.g., deform the fastening collar). The fastening system installation apparatus 100 can be configured with various components in order to engage the fastening system's fastening collar and deform the fastening collar. For example, the fastening system installation apparatus 100 can comprise an anvil 102 and a sleeve 104.

The sleeve 104 can be configured to receive and/or retain various components. The sleeve 104 comprises a first sleeve end 104a, a second sleeve end 104b, and a sleeve cavity 104c extending along a longitudinal axis, Aₛ, of the sleeve 104 from the first sleeve end 104a to the second sleeve end 104b. In various non-limiting embodiments, the sleeve 104 can be substantially cylindrical and the sleeve cavity 104c can be substantially cylindrical. In other non-limiting embodiments, the sleeve 104 and the sleeve cavity 104c can comprise a different shape, as desired. In various non-limiting embodiments, the sleeve cavity 104c can comprise a keyway.

The sleeve cavity 104c is configured to slidably receive the anvil 102. The anvil 102 comprises a first anvil end 102a, a second anvil end 102b, and an anvil cavity 102c extending from the first anvil end 102a along the longitudinal axis, Aₐ. The anvil cavity 102c can be sized and/or configured to receive at least a portion of a fastening collar, such as, for example, a bolt collar and/or a nut. In various examples, the anvil cavity 102c can be sized and/or configured to receive a pin of a fastener to which a fastening collar will be secured and can enable the pin of the fastener to traverse through the anvil cavity 102c. The anvil cavity 102c can be a continuous cavity that can extend from the first anvil end 102a to the second anvil end 102b.

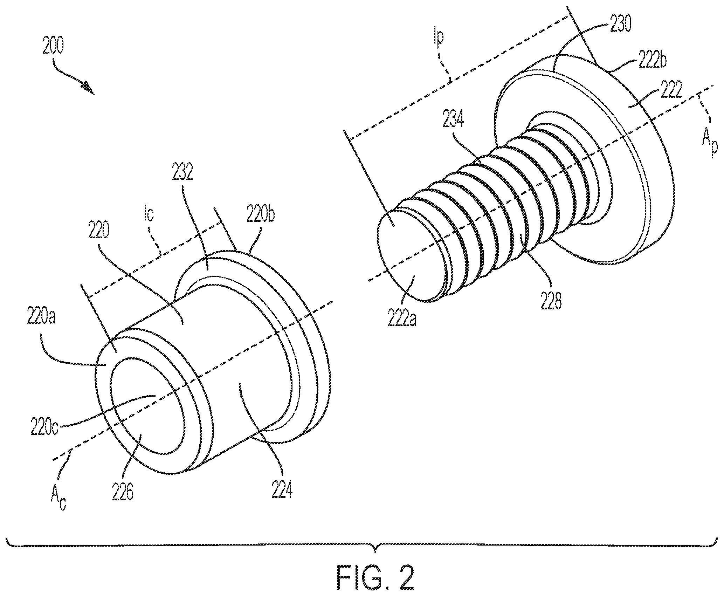

The anvil 102 is configured to engage and/or deform a fastening collar of a fastening system, such as, for example, fastening collar 220 described below and illustrated in FIG. 2. For example, again referring to FIGs. 1A and 1B, the anvil 102 can exert a radial and an axial force on a fastening collar of the fastening system. Applying a radial force to the fastening collar can enable a larger clamping force to be achieved when the fastening collar is installed in a structure and also may allow for a reduction in the length of the fastening collar and/or a pin of the fastening system.

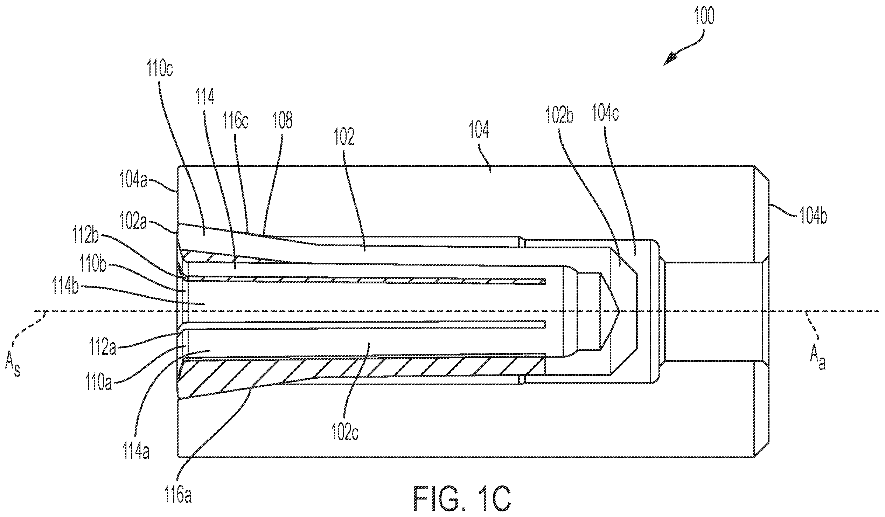

The sleeve 102 can comprise a tapered inner surface 108 on the first sleeve end 102a. The tapered inner surface 108 can be configured to forcibly contact the anvil 102 and change a configuration of the anvil 102 from an open configuration, as illustrated in FIGs. 1A-1B, to a closed configuration, as illustrated in FIG. 1C. The change in configuration can facilitate application of the radial force by the anvil 102 to the fastening collar.

The anvil 102 comprises at least two portions formed by at least two axial channels in the anvil 102. For example, the anvil 102 can comprise portions 110a-110f formed by axial channels 112a-112f extending from the first anvil end 102a. The axial channels 112a-112f can be substantially parallel to the longitudinal axis, Aₐ, of the anvil 102. The portions 110a-110f can extend from the second anvil end 102b. In various embodiments, when the anvil 102 is received by the sleeve 104, the longitudinal axis, Aₐ, is aligned with the longitudinal axis, Aₛ. The portions 110a-110f can be circumferentially spaced about the longitudinal axis, Aₐ, of the anvil 102, and in various non-limiting embodiments, the portions 110a-110c can be substantially equally circumferentially spaced about the longitudinal axis, Aₐ, of the anvil 102. Equally spacing the portions 110a-110f circumferentially about the longitudinal axis, Aₐ, of the anvil 102 can facilitate centering of a fastening collar within the anvil cavity 104c when the fastening system installation apparatus 100 is in use. Additionally, equally spacing the portions 110a-110f circumferentially about the longitudinal axis, Aₐ, can facilitate a substantially equal application of radial force to a fastening collar within the anvil cavity 102c such that a desired deformation of the fastening collar can be achieved.

The anvil 102 is moveable with respect to the sleeve 104, such that the anvil 102 can change position with respect to the sleeve 104 as described with reference to FIGs. 1A-1C. The portions 110a-110f each have inner surfaces 114a-114f, respectively, facing inwardly relative to the longitudinal axis, Aₐ. The inner surfaces 114a-114f define the anvil cavity 102c. According to the invention, the inner surfaces 114a-114f are substantially smooth such that the inner surfaces 114a-114f apply a substantially even pressure to the fastening collar. The substantially even pressure evenly deform the fastening collar while avoiding weakening the structure of the fastening collar (e.g., cutting the fastening collar).

The portions 110a-110f can be flexible and can enable movement of each of the inner surfaces 114a-114f relative to one another. Additionally, the portions 110a-110f can flex towards and away from the longitudinal axis, Aₐ, of the anvil 102. For example, each portion 110a-110f can be configured in an open configuration as illustrated in FIG. 1A-1B and upon retraction of the anvil 102 into the sleeve 104, the portions 110a-110f can forcibly contact the inner surface 108 of the sleeve 104 and move to a closed configuration, as illustrated in FIG. 1C. When the anvil 102 is extended, each portion 110a-110f can move to the open configuration, as illustrated in FIGs. 1A-1B. For example, each portion 110a-110f can be configured as a resilient member (e.g., a leaf spring) such that the open configuration can be a resting configuration of the resilient member. In various non-limiting embodiments, each portion 110a-110f can independently move relative to one another.

In various non-limiting embodiments, a spring (not shown) can be disposed in the sleeve cavity 104c intermediate the second anvil end 102b and the second sleeve end 104b. The spring can be configured to urge the second anvil end 102b towards the first sleeve end 104a, such that the anvil 102 is in the open configuration. The force generated by the spring may have to be overcome before the anvil 102 can retract within the sleeve cavity 104c.

Referring to FIGs. 1A-1B, in an open configuration of the anvil 102, including the open configuration of the portions 110a-110f, each surface 114a-114f can be a first distance from the longitudinal axis, Aₐ, of the anvil 102. The surfaces 114a-114f can define an open diameter when the portions 110a-110f are in the open configuration. The open diameter can be configured to allow a fastening collar to be received in the anvil cavity 104c. Thereafter, the portions 110a-110f can be moved to the closed configuration, as illustrated in FIG. 1C, which can change (e.g., decrease) the open diameter to a closed diameter.

The movement of the surfaces 114a-114f between the open and closed configurations can forcibly contact and deform the fastening collar positioned within the anvil cavity 102c. For example, the surfaces 114a-114f can move towards the longitudinal axis, Aₐ, of the anvil 102 and can apply a radial force to a fastening collar positioned in the anvil cavity 104c, to at least partially deform the fastening collar positioned in by the anvil cavity 104c. For example, the radial force can apply radial contact pressure to the fastening collar by the surfaces 114a-f that exceeds the yield strength of the fastening collar, the fastening collar can deform on a pin of the fastening system and into the axial channels 112a-f of the anvil 102. The closed diameter of the anvil 102 can be configured to impart a desired level of deformation to the fastening collar. Enabling the sleeve 104 to receive and forcibly contact the anvil 102 to change the configuration of the anvil 102 can enable a single linear force to be applied to the sleeve 104, which in turn can apply an axial force and a radial force to the fastening collar via the anvil 102. Thus, a desired level of clamping force can be achieved, while maintaining a desired installed height of the fastening system.

Referring again to FIGs. 1A-1B, the fastening system installation apparatus 100 can comprise tapered outer surfaces 116a-116f disposed on each of the portions 110a-110f, respectively, of the anvil 102, and on the first end 102a of the anvil 102. The tapered outer surfaces 116a-116f define an outward taper of each of the portions 110a-110f relative to the longitudinal axis, Aₐ, of the anvil 102 and, collectively, the tapered outer surfaces 116a-116f define an outward taper of the first anvil end 102a relative to the longitudinal axis, Aₐ, of the anvil 102.

The tapered outer surfaces 116a-116f of the first anvil end 102a can be configured to forcibly contact the tapered inner surface 108 of the first sleeve end 104a. The forcible contact can move the portions 110a-110f and change the location of the surfaces 114a-114f relative to one another. For example, the sleeve 104, including the inner surface 108, can be configured to radially displace the portions 110a-110f inward relative to the longitudinal axis, Aₐ, of the anvil 102 responsive to forcible contact between the first anvil end 102a and the first sleeve end 104a. The forcible contact on the tapered outer surfaces 116a-116f can move the portions 110a-110f toward the longitudinal axis, Aₐ, of the anvil 102 and can change the configuration of the anvil 102 from the open configuration, as illustrated in FIGs. 1A-1B, to the closed configuration, as illustrated in FIG. 1C. In various non-limiting embodiments, the tapered outer surfaces 116a-116f can be tapered at an angle in a range of 2 degrees to 40 degrees relative to the longitudinal axis, Aₐ, of the anvil 102, such as, for example, in a range of 3 degrees to 40 degrees, in a range of 8 degrees to 40 degrees, 10 degrees to 40 degrees, or 20 degrees to 40 degrees, all relative to the longitudinal axis, Aₐ, of the anvil 102.

In various examples, the fastening system installation apparatus 100 may not comprise a collet or other feature configured to engage a pin of the fastening system. The first anvil end 102a can be configured to axially apply force to a fastening collar of the fastening system to urge the fastening collar towards a head of a pin and/or a structure and radially apply a force to the fastening collar to deform the fastening collar onto the pin.

In various non-limiting embodiments, the fastening system installation apparatus 100 can comprise at least one of a metal, a metal alloy, and a composite material. In various non-limiting embodiments, the metal or metal alloy can comprise at least one of aluminum, an aluminum alloy, titanium, a titanium alloy, nickel, a nickel alloy, iron, and an iron alloy. The composite material can comprise, for example, a carbon fiber composite material.

The fastening system installation apparatus can be manufactured by various processes, such as, for example, at least one of machining, casting, molding, and additive manufacturing. For example, the anvil 102 can be machined and then subjected to a secondary process such as, for example, heat treating, in order to configure the anvil 102 in the open configuration. In various other non-limiting embodiments, the anvil 102 can be cast in the open configuration. The anvil 102 can be a single, continuous piece or can include two or more pieces operatively joined together. For example, each portion 110a-110f can be a separate piece and can be operatively joined together to form the anvil 102 by a secondary process.

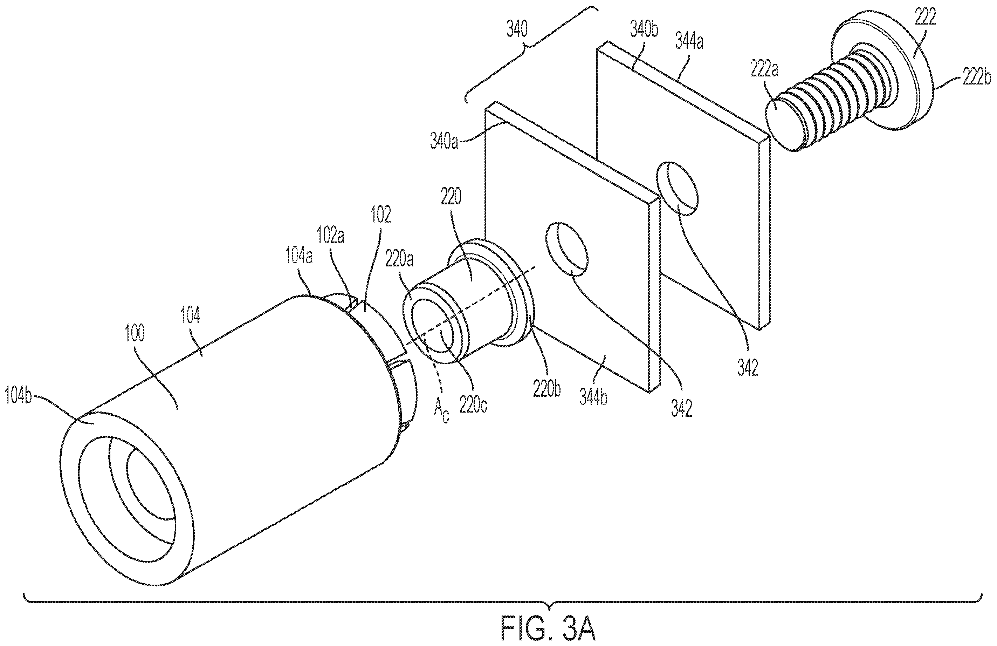

FIG. 2 illustrates a non-limiting embodiment of a fastening system 200 according to the present disclosure. The fastening system 200 can be adapted to be installed in a bore in a structure (e.g., as illustrated in FIGs. 3A-3B and discussed below). The fastening system 200 can comprise at least two components, such as, for example, a fastening collar 220 and a pin 222 as illustrated in FIG. 2, or in some non-limiting embodiments, at least three components (not shown). In various non-limiting embodiments, the fastening system 200 can comprise a two-piece assembly, including the fastening collar 220 and the pin 222. In some non-limiting embodiments, the fastening system 200 can comprise a lockbolt. For example, the lockbolt can be a structural lockbolt fastener, such as, for example, a structural rivet, a structural bolt, or a structural stud.

The fastening collar 220 can comprise a first collar end 220a, a second collar end 220b, an elongate portion 224 disposed intermediate the first collar end 220a and the second collar end 220b, and a collar cavity 220c extending through the elongate portion 224 from the first collar end 220a to the second collar end 220b. The elongate portion 224 can define a longitudinal axis, A_{c}, of the fastening collar 220 and/or the fastening system 200. An inner surface 226 of the elongate portion 224 defining the collar cavity 220c can comprise a substantially cylindrical region, a threaded region, an annular shoulder, a groove, other feature, or a combination thereof depending on the desired application. The fastening collar 220 can be sized and configured to engage with a fastening system installation apparatus, such as, for example, fastening system installation apparatus 100.

The pin 222 can comprise a first pin end 222a, a second pin end 222b, and a shank 228. The shank 228 can comprise a shape and size suitable to be received by the collar cavity 220c of the fastening collar 220. For example, the shank 228 can comprise a generally cylindrical shape. The shank 228 can extend intermediate the first pin end 222a and the second pin end 222b and can be dimensioned so that the shank 228 can be disposed at least partially through the collar cavity 220c. When the shank 228 is inserted in the collar cavity 220c, the second pin end 222b can be disposed adjacent to the second collar end 220b, and the first pin end 222a can be disposed adjacent to, or beyond, the first collar end 222a. The second pin end 222b can comprise a head portion 230 configured to inhibit the pin 222 from traversing completely through a bore in a structure. For example, a bore in a structure can comprise a bore diameter less than a head diameter of the head portion 230 so that the head portion 230 cannot pass through the bore.

In certain non-limiting embodiments, the shank 228 can be generally cylindrical and smooth. For example, the shank 228 can be free of an annular shoulder, grooves, threads, or other features prior to forcible contact with a fastening system installation apparatus. In various non-limiting embodiments, the shank 228 can comprise an annular shoulder, a groove, a thread, other feature, or a combination thereof.

The shank 228 can define the longitudinal axis, Aₚ, of the pin 222 and/or the fastening system 200. The shank 228 can be configured to engage the fastening collar 220 upon installation in order to secure the shank 228 to the fastening collar 220. In various non-limiting embodiments, upon engagement of the pin 222 and the fastening collar 220 when the components are installed, the longitudinal axis, Aₚ, of the pin 222 and the longitudinal axis, A_{c}, of the fastening collar 220 can be substantially aligned and form the longitudinal axis of the fastening system 200.

In various non-limiting embodiment, a shank diameter of the shank 228 can be at least 0.06 inches, such as, for example, at least 0.1 inch, at least 0.5 inches, or at least 1 inch. In various non-limiting embodiments, the shank diameter can be no greater than 4 inches, such as, for example, no greater than 1 inch, no greater than 0.5 inches, or no greater than 0.1 inch. In various non-limiting embodiments, the shank diameter can be in a range of 0.06 inches to 4 inches, such as, for example, 0.06 inches to 1 inch, or 0.06 inches to 0.5 inches.

The collar cavity 220c can be configured to receive the pin 222. For example, the collar cavity 220c can comprise a collar diameter greater than a diameter of the shank 228. The fastening collar 220 can comprise a flange 232 comprising a flange diameter sized and configured in order to inhibit the flange 232 of the fastening collar 220 from traversing through a bore in a structure. The flange 232 can be configured to receive an axial force from an anvil of a fastening system installation apparatus, such as, for example, anvil 102. In various non-limiting embodiments, the fastening collar 220 can be generally cylindrical.

The pin length, *lₚ*, of the pin 222 can affect the height of the fastening system 200 protruding from a structure after installation. Thus, it may be desired to minimize the pin length, *lₚ*, while still achieving a desired clamp force after installation of the fastening system 200. The second pin end 222b may not comprise a pull region configured to be engaged by a fastening system installation apparatus. The second pin end 222b can extend beyond the second collar end 220b a first axial length, may be substantially flush with the second collar end 220b, or may be recessed with the second collar end 220b when installed in a structure. In various non-limiting embodiments, the first axial length can be no greater than two times the second diameter of the shank 228, such as, for example, no greater than one times the second diameter of the shank 228.

In this specifications the following non-SI units are used, which may be converted to the respective SI or metric unit according to the following conversion table:

| **Name of unit** | **Symbol** | **Conversion factor** | **SI or metric unit** |
|---|---|---|---|
| Inch | in | 2.54 | cm |
| Pound | lbs | 0.45359.2 | kg |

The collar length, *l_{c}*, of the fastening collar 220 can affect the height of the fastening system 200 protruding from a structure after installation. Thus, it may be desired to minimize the collar length, *l_{c}*, while still achieving a desired clamp force after installation of the fastening system 200. The collar length, *l_{c}*, can be no greater than 1 inch, such as, for example, no greater than 0.75 inch, no greater than 0.5 inch, no greater than 0.25 inch, or no greater than 0.1 inch. The collar length, *l_{c}*, can be at least 0.05 inch, such as, for example, at least 0.1 inch, at least 0.25 inch, at least 0.5 inch, or at least 0.75 inch. In various non-limiting embodiments, the collar length, *l_{c}*, can be in a range of 0.05 inch to 1 inch or 0.1 inch to 0.5 inch.

The collar cavity 220c of the fastening collar 220 can be configured to at least partially receive the shank 228 of the pin 222 therein. For example, the collar cavity 220c can comprise a shape suitable to receive the shank 228 of the pin 222, such as, for example, a generally cylindrical shape. During and/or after introduction of the shank 228 into the collar cavity 220c, the fastening collar 220c can be at least partially radially deformed onto the shank 228 responsive to forcible contact between the fastening collar 220 and a fastening system installation apparatus, as described herein. For example, responsive to engagement between a fastening system installation apparatus, such as fastening system installation apparatus 100, and the fastening system 200, the fastening collar 220 can receive a radial force and an axial force. The axial force can urge the fastening collar 220 towards the second pin end 222b along the longitudinal axis, A_{c}, and the radial force can deform the elongate portion 224 onto a shank 228 of the pin 222 of the fastening system 200. The axial and radial forces can provide a desired clamping force between the fastening collar 220 and the pin 222.

The amount of collar length, *l_{c}*, and the amount of pin length, *lₚ*, that engage one another can affect the clamping force achieved after installation of the fastening system 200. Additionally, the amount of deformation of the fastening collar 220 can affect the clamping force achieved after installation of the fastening system 200. The fastening system 200 can achieved a desired level of clamping force. For example, upon installation of the fastening system 200 into a structure, the fastening system 200 can achieve a clamping force of at least 400 lbs., such as, for example, at least 500 lbs., at least 1000 lbs., at least 1100 lbs., at least 1300 lbs., at least 1500 lbs., or at least 2000 lbs. In various non-limiting embodiments wherein the fastening system 200 comprises a 3/16 inch shank diameter, a clamping force of at least 400 lbs. can be achieved after installation. In various non-limiting embodiments wherein the fastening system 200 comprises a 1/4 inch shank diameter, a clamping force of at least 1000 lbs. can be achieved after installation. Thus, the fastening system 200 can be configured to minimize the height of the fastening system 200 protruding from a structure after installation while achieving a desirable clamping force.

The deformation of the fastening collar 220 can secure the fastening collar 220 to the shank 228. It may be desirable to provide for an indication showing when a fastening collar 220 has been secured to the shank 228. For example, the elongate portion 224 can be configured to have ribs 336 formed on an outer surface thereof, as illustrated and described with respect to FIGs. 3A-3B, responsive to application of a radial force. The formed ribs 336 can provide a visual indication that the fastening system 200 has been properly installed. Thus, an operator can rapidly visually inspect each fastening system 200 that was installed in a structure.

In various non-limiting embodiments, the shank 228 can comprise at least one of a generally smooth region, an annular shoulder, a groove, a threaded region, and other feature that is adapted to engage the surface 226 of the fastening collar 220 upon installation of the fastening system 200. For example, the generally smooth region, annular shoulder, groove, threaded region, and/or other feature can be external relative to the shank 228. In various non-limiting embodiments, all or a portion of the shank 228 includes grooves. For example, as shown in FIG. 2, the shank 228 of the pin 222 may include grooves 234. In other non-limiting embodiments, the shank 228 lacks grooves. In various non-limiting embodiments, a portion of the shank 228 includes an annular shoulder. In other non-limiting embodiments, the shank 228 lacks an annular shoulder. In various non-limiting embodiments, a portion of the shank 228 includes a threaded portion. In other non-limiting embodiments, the shank 228 lacks a threaded portion.

In various non-limiting embodiments, the pin 222 may lack a breakneck groove or other feature configured to fracture upon installation of the fastening system 200. In various other non-limiting embodiments, the pin 222 may comprise a breakneck groove (not shown) or other feature configured to fracture upon installation of the fastening system 200.

The fastening system 200 can comprise at least one of a metal, a metal alloy, a composite material, and other suitable material. For example, in various non-limiting embodiments, the fastening system 200 can comprise at least one of aluminum, an aluminum alloy, titanium, a titanium alloy, nickel, a nickel alloy, iron, an iron alloy, and a carbon fiber composite material.

Referring to FIGs. 3A-3B, the fastening system installation apparatus 100 can engage the fastening collar 220 of the fastening system 200, urge the fastening collar 220 towards the structure 340, and deform the fastening collar 220, thereby joining two or more layers of the structure. In various non-limiting embodiments, the structure 340 can be configured as an aerospace component or structure, an automotive component or structure, a transportation component or structure, a building and construction component or structure, or other component or structure. In various non-limiting embodiments, the structure 340 can comprise at least two layers, such as, for example, a first layer 340a and a second layer 340b.

As illustrated in FIG. 3A, the fastening collar 220 and the pin 222 can be aligned with bores 342 in the structure 340. The fastening collar 220 can be proximal to the first layer 340a, and the pin 222 can be proximal to the second layer 340b. The first anvil end 102a of the anvil 102 can be aligned with the fastening collar 220 when the anvil 102 is in the open configuration.

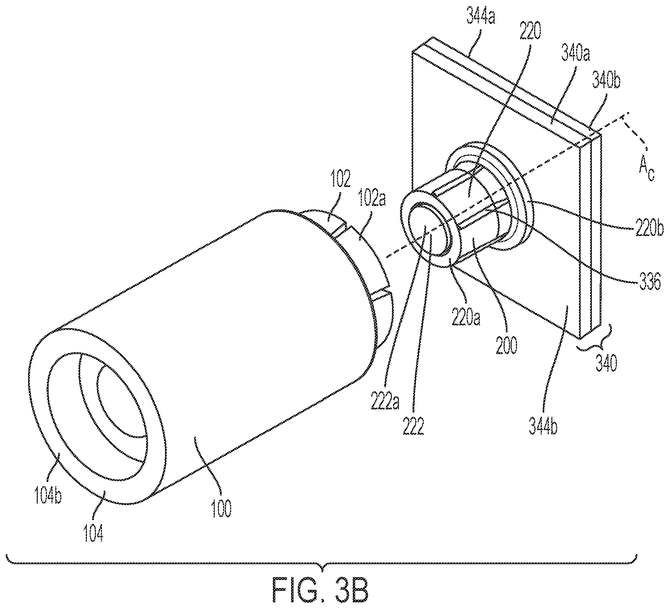

The fastening system 200 can join the layers of the structure 340, as shown, for example, in FIG. 3B, by a method for fastening. The method for fastening can comprise inserting the pin 222 through bores 342 in both layers 340b, 340a of the structure 340 and positioning the pin 222 within the collar cavity 340c of the fastening collar 220. For example, at least a portion of the pin 222 can be passed through the collar 340c. The pin 222 can be positioned by positioning the first anvil end 202a of the anvil 202 in contact with the fastening collar 220 of the fastening system 200. A first force (e.g., axial force) can be applied to the fastening collar 220 in a direction substantially aligned with the longitudinal axis, A_{c}, of the fastening collar 220 utilizing the first anvil end 102a. The first force can be applied by moving the anvil 102 towards the structure 340 and contacting the fastening collar 220 with the first anvil end 102a. The first force can urge the first layer 340a and the second layer 340b toward each other and urge the pin 222 to be positioned within the collar cavity 220c. For example, the first force can urge the first and second layers, 340a and 340b, into contact with one another.

In various non-limiting embodiments, a pin force can be applied to the second pin end 222b of the pin 222 on a first side 344a of the structure 340. The fastening collar 220 can be positioned in contact with a second side 344b of the structure 340. The second side 344b can be disposed opposite the first side 344a of the structure.

Moving the anvil 102 toward the structure 340 can comprise moving the fastening system installation apparatus 100 toward the structure 340 by applying an axial force to the sleeve 104. Movement of the sleeve 104 can urge the anvil 102 to change from the open configuration to the closed configuration, including applying a second force (e.g., radial force) to the fastening collar 220. The second force can be applied to the fastening collar 220 in a direction substantially perpendicular to the longitudinal axis, A_{c}, of the fastening collar 220 utilizing the first anvil end 102a. The second force can apply radial contact pressure less than the yield strength of the fastening collar 220 such that the fastening collar 220 may not deform, or minimally deforms, during application of the second force. In various non-limiting embodiments, a time during which the first force is being applied to the fastening collar 220 at least partially overlaps with a time during which the second force is being applied to the fastening collar 220.

A third force (e.g., radial force) can be applied to the fastening collar 220 in a direction substantially perpendicular to the longitudinal axis, A_{c}, of the fastening collar 220 utilizing the first anvil end 102a. The third force can be applied by urging the anvil 102 to change from the open configuration to the closed configuration. The third force can apply radial contact pressure that exceeds a yield strength of the fastening collar 220. Thus, the fastening collar 220 can be deformed onto the pin 222 of the fastening system 200, thereby affixing the collar 220 to the pin 222 such securing the layers 340a, 340b of the structure 340. In various non-limiting embodiments wherein the shank 228 of the pin 222 comprises a thread, a groove, an annular shoulder, or a combination thereof, the fastening collar 220 can be deformed onto the thread, the groove, the annular shoulder, or the combination thereof. In various non-limiting embodiments, a time during which the first force is being applied to the fastening collar 220 at least partially overlaps with a time during which the third force is being applied to the fastening collar 220. In various non-limiting embodiments, the third force is applied to the fastening collar 220 after the second force is applied to the fastening collar 220.

In various non-limiting embodiments, the third force forms ribs 336 on the fastening collar 220 of the fastening system 200. The ribs 336 can be formed by material of the fastening collar 220 protruding into the axial channels 112a-112f of the anvil 102 as the anvil is changed from the open position to the closed position. The ribs 336 can be substantially aligned with the longitudinal axis, A_{c}, and can be a visible indication that the fastening system 200 has been installed.

Application of the third force and deformation of the fastening collar 220 can elongate the pin 222 and further urge the first and second layers 340a and 340b of the structure 340 into contact with one another, which can achieve a desired clamping force between the first and second layers 340a and 340b. Thus, the application of an axial force to the sleeve 104 can apply an axial force and a radial force to the collar 220 to achieve a desired clamping force.

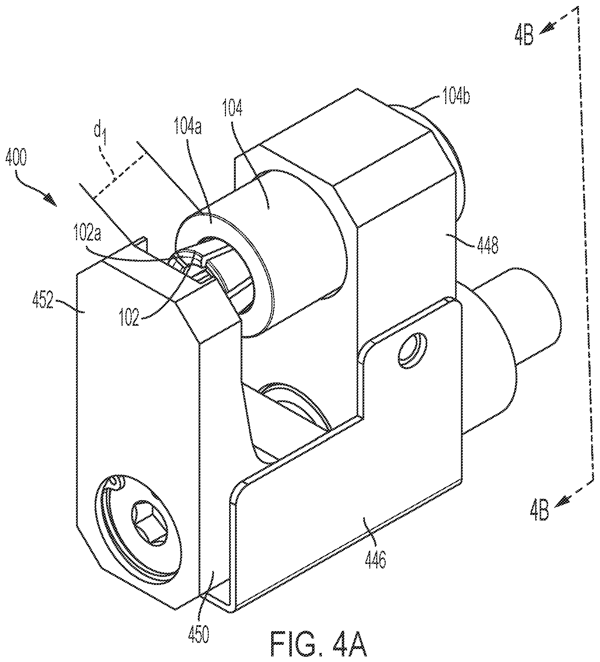

Referring to FIGs. 4A-4B, a fastening system installation apparatus 400 is provided. The fastening system installation apparatus 400 comprises the anvil 102, the sleeve 104, and housing 446. The housing 446 can comprise a first section 448 and a second section 450. The first section 448 can be operatively coupled to the anvil 102. For example, the first section 448 can be operatively coupled to the anvil 102 by attaching the first section 448 of the housing 446 to the sleeve 104 such that the position of the sleeve 104 is fixed with respect to the first section 448 of the housing 446. For example, the first section 448 can comprise a bore 438 configured to receive the sleeve 104, and the sleeve 104 can be press fit into the bore 438 of the first section. In various non-limiting embodiments, the sleeve 104 can be attached to the first section 448 of the housing 446 by a different method.

The first section 448 can be configured to slidably receive the second section 450 such that the first section 448 and the second section 450 are moveable with respect to each other. The second section 450 can comprise a support 452 defining an axis, Aₓ, which can be substantially aligned with the longitudinal axis, Aₐ, of the anvil 102. An object positioned between the support 452 and the anvil 102 can be subjected to a clamping force responsive to movement of the first section 448 and/or the second section 450. In various non-limiting embodiments, the second section 450 can be substantially "J"-shaped.

The housing 446 can be configured to change the position of the support 452 relative to the anvil 102. The first section can comprise a bore 454 configured to receive a shaft portion 458 of the second section 450. The shaft portion 458 can slide through the bore 454 such that the position of the support 452 can change with respect to the anvil 102. For example, a linear force can be applied to the second section 450, and the second section 450 can slide through the bore 454 in the first section 446 such that a distance, d₁, between the support 452 and the first anvil end 102a decreases. Upon release of the linear force and/or application of a linear force in an opposite direction, the second section 450 can slide back through the bore 454 in the first section 446 such that the distance, d₁, between the support 452 and the first anvil end 102a increases. Thus, the second section 450 can move independently of the first section 448. In various non-limiting embodiments, the shaft portion 458 can comprise a bolt extending through a bore 460 in the second section 450 and through the bore 454.

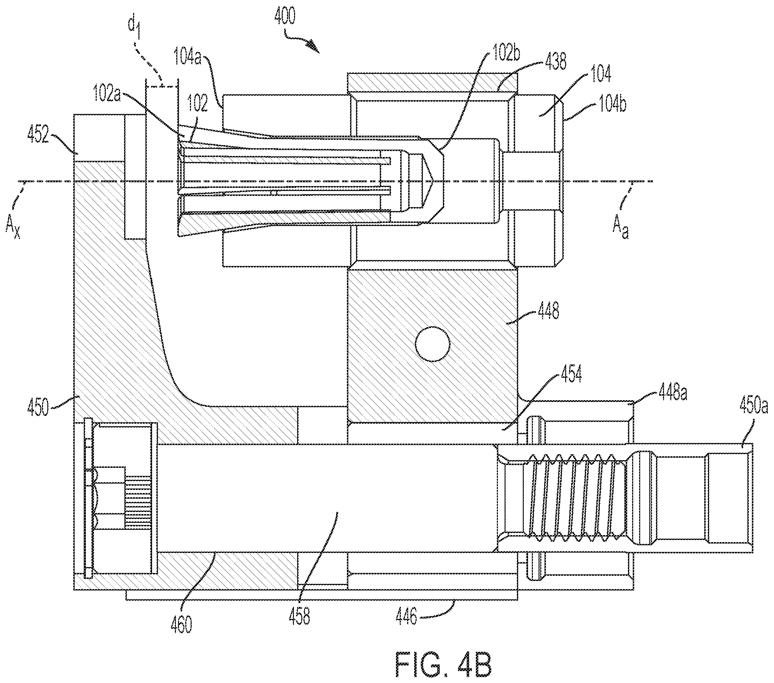

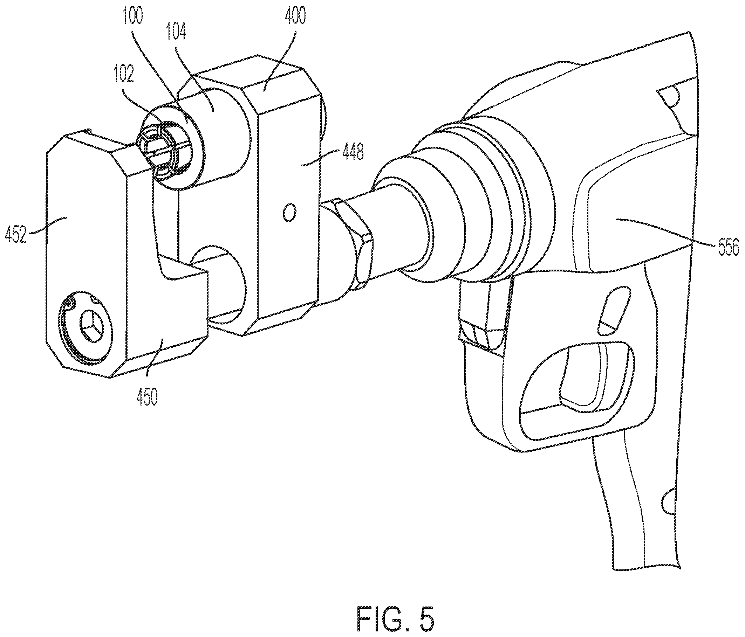

In various non-limiting embodiments, the first section 448, the second section 450, or a combination thereof can be configured to engage a piston of an installation tool. As illustrated in FIG. 5, for example, a portion 448a of the first section 448 can be operatively coupled to an installation tool 556 in a fixed position relative to the installation tool 556. A portion 450a (shown in FIG. 4b) of the second section 450 can be operatively coupled to a piston of the installation tool 556 in a slidable position relative to the first section 448. For example, as the piston of the installation tool 556 retracts, the first section 448 can maintain substantially the same position relative to the installation tool 556, while the second section 450 can be moved with respect to the first section 448 and urged towards the installation tool 556.

In various non-limiting embodiments, the installation tool 556 can be a battery-powered tool, such as, for example, at least one of a Huck^{®} Range Force^{™} battery-powered installation tool; a pneumatic tool, such as, for example, a Huck^{®} 254^{™} pneumatic tool; and a hydraulic tool, such as, for example, a Huck^{®} SF ^{™} hydraulic tool, all available from Howmet Global Fastening Systems, Waco, Texas.

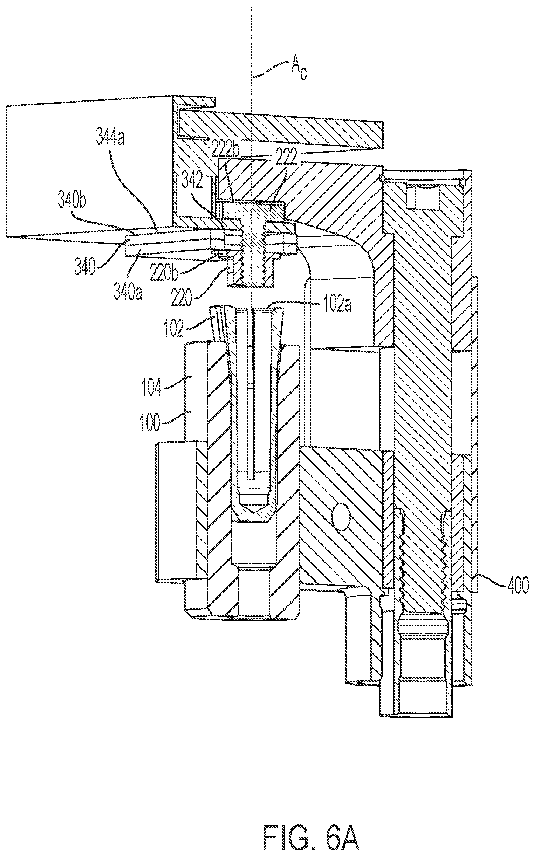

Referring to FIGs. 6A-6C, the fastening system installation apparatus 400 can engage the fastening collar 220 of the fastening system 200, urge the fastening collar 220 towards the structure 340, and deform the fastening collar 220, thereby installing the fastener system 220 in a structure. As illustrated in FIG. 6A, the pin 222 can be aligned with and at least partially passed through the bore 342 in the structure 340. The fastening collar 220 can be aligned with the pin 222, and the pin 222 can be at least partially passed through the collar cavity 220c. The fastening collar 220 can be proximal to the first layer 340a, and the pin 222 can be proximal to the second layer 340b. The first anvil end 102a of the anvil 102 can be aligned with the fastening collar 220 in the open configuration of the anvil 102.

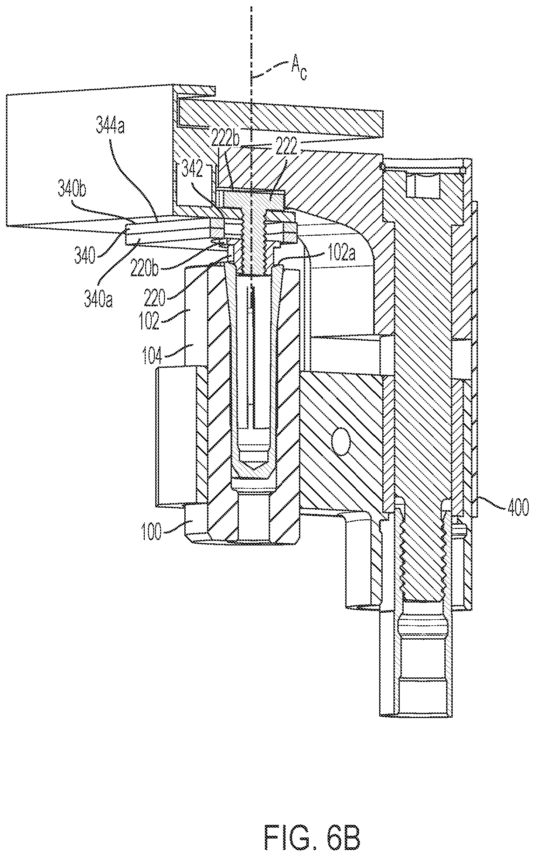

Thereafter, referring to FIG. 6B, the first anvil end 102a of the anvil 102 can be placed in contact with the fastening collar 220 of the fastening system 200 and a first force (e.g., axial force) can be applied to the fastening collar 220 in a direction substantially aligned with the longitudinal axis, A_{c}, of the fastening collar 220 utilizing the first anvil end 102a. The first force can be applied by moving the first anvil end 102a towards the structure 340 and contacting the fastening collar 220 with the first anvil end 102a. For example, the support 452 of the second section 450 and the anvil 102 can be urged towards one another to decrease a distance therebetween. In various non-limiting embodiments, a piston of an installation tool attached to the fastening system installation apparatus 400 can retract causing the first and second sections 448, 450 to move relative to one another and thereby urging the support 452 and the anvil 102 towards one another. The first force applied to the fastening system 200 can urge the first layer 340a towards the second layer 340b. For example, the first force can urge the first and second layers, 340a and 340b, into contact with one another.

Utilizing the support 452 of the second section 450, a pin force can be applied to the second pin end 222b of the pin 222 on a first side 344a of the structure 340. The fastening collar 220 can be positioned in contact with a second side 344b of the structure 340. The second side 344b can be disposed opposite the first side 344a of the structure. In various non-limiting embodiments, retracting the piston of the installation tool can decrease a distance between the support 452 and the anvil 102, thereby clamping on the structure 340 and/or the fastening system 200. Thus, the second pin end 222b can be urged toward the second collar end 220b.

Clamping the structure 340 and/or the fastening system 200 together can forcibly contact the first anvil end 102a with the fastening collar 220 and can urge the anvil 102 to change from the open configuration to the closed configuration, urging the anvil 102 to apply a second force (e.g., radial force) to the fastening collar 220. The second force can be applied to the fastening collar 220 in a direction substantially perpendicular to the longitudinal axis, A_{c}, of the fastening collar 220 utilizing the first anvil end 102a. However, the second force can apply radial contact pressure that is less than the yield strength of the fastening collar 220 such that the fastening collar 220 may not deform, or minimally deforms, during application of the second force. In various non-limiting embodiments, a time during which the first force is being applied to the fastening collar 220 at least partially overlaps with a time during which the second force is being applied to the fastening collar 220. The overlap in time can enable the first force to reduce gaps between the structure 340 and fastening system 200 prior to deformation of the fastening collar 220 such that a desirable clamping force can be achieved.

Continuing the retraction of the piston of the installation tool can apply a third force (e.g., radial force) to the fastening collar 220 in a direction substantially perpendicular to the longitudinal axis, A_{c}, of the fastening collar 220 utilizing the first anvil end 102a. The third force can apply radial contact pressure that exceeds a yield strength of the fastening collar 220. Thus, the fastening collar 220 can be deformed onto the pin 222 of the fastening system 200 and secured to the structure 340. In various non-limiting embodiments wherein the shank 228 of the pin 222 comprises a thread, a groove, an annular shoulder, or a combination thereof, the fastening collar 220 can be deformed onto the thread, the groove, the annular shoulder, or the combination thereof of the shank 228. Application of the third force can elongate the pin 222 and further urge the first and second layers 340a and 340b of the structure 340 into contact with one another, which can achieve a desired clamping force between the first and second layers 340a and 340b.

The first, second, and third pin forces can be applied by a single stroke of the piston of the installation tool. For example, as the piston initially retracts at a first force level, the first and second pin forces can be applied to the structure 340 and/or fastening system 200. In various non-limiting embodiments, when gaps between the components of the structure 340 and/or the fastening system 200 decrease, the first force level can increase until the third force can be applied to the fastening collar 220 thereby securing the fastening system 200 to the structure 340.

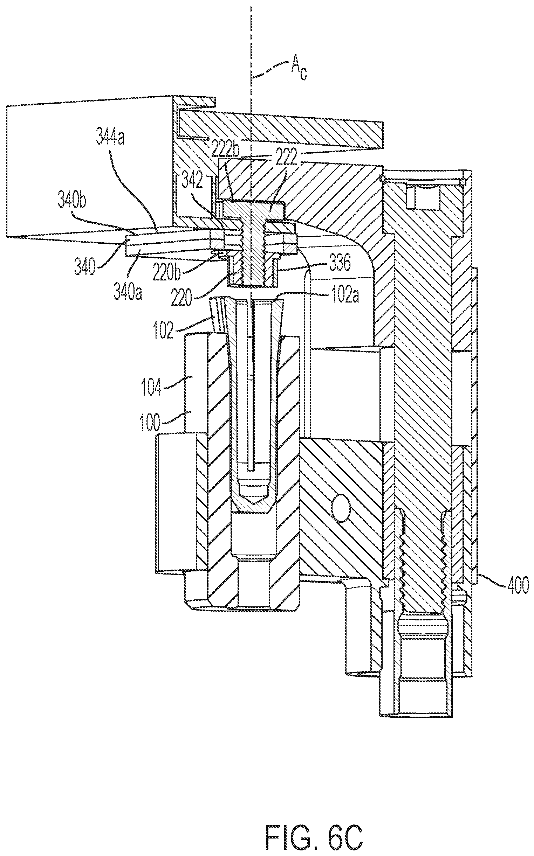

Referring to FIG. 6C, the piston of the installation tool can be extended to thereby expand the distance between the support 452 and the anvil 102 such that the anvil 102 can be removed from the deformed fastening collar 220. As illustrated, the third force has formed ribs 336 on the fastening collar 220.

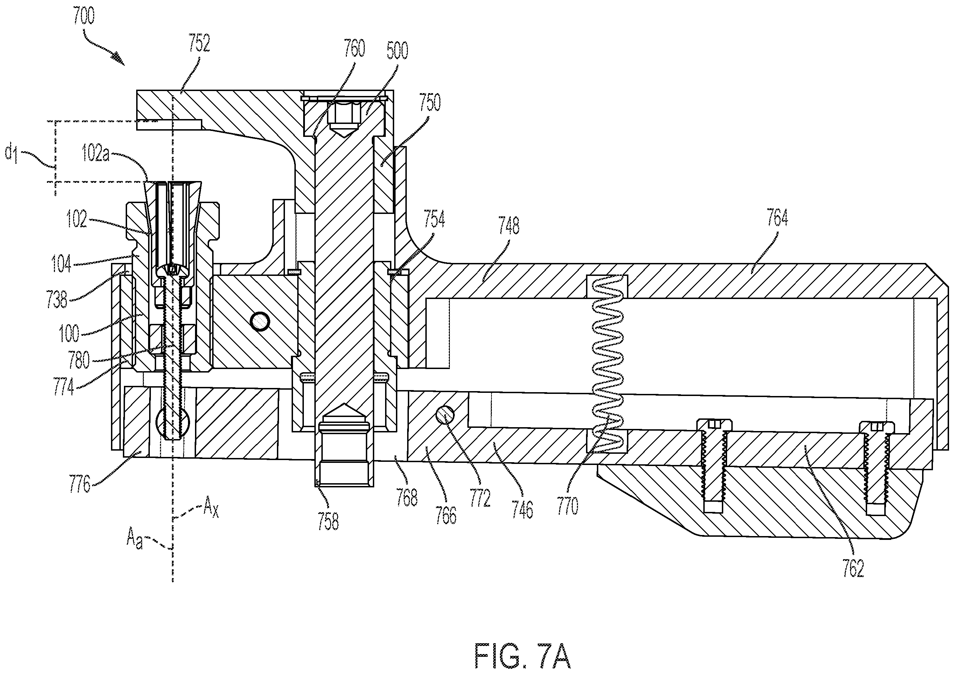

Referring to FIG. 7A, a fastening system installation apparatus 700 is provided. The fastening system installation apparatus 700 comprises the anvil 102, the sleeve 104, and a housing 746. The housing 746 can comprise a first section 748, a second section 750, and a third section 766. The first section 748 can be operatively coupled to the sleeve 104. For example, the first section 748 can comprise a bore 738 configured to receive the sleeve 104, and the sleeve 104 can be attached to the first section 748 of the housing 746 by a press fit. In various non-limiting embodiments, the sleeve 104 can be attached to the first section 748 by a different method.

The first section 748 can be configured to slidably receive the second section 750 such that the first section 748 and the second section 750 are moveable with respect to each other. The second section 750 can comprise a support 752 moveable along axis, Aₓ, which can be substantially aligned with the longitudinal axis, Aₐ, of the anvil 102. An object positioned between the support 752 and the anvil 102 can be subjected to a clamping force responsive to movement of the first section 748 and/or the second section 750. In various non-limiting embodiments, the second section 750 can be substantially "J"-shaped.

In various non-limiting embodiments, the first section 748, the second section 750, the third section 766, or a combination thereof can be configured to engage a piston of an installation tool, such as, for example, at least one of a Huck^{®} Range Force^{™} battery-powered installation tool; a pneumatic tool, such as, for example, a Huck^{®} 254^{™} pneumatic tool; and a hydraulic tool, such as, for example, a Huck^{®} SF ^{™} hydraulic tool, all available from Howmet Global Fastening Systems, Waco, Texas.

The housing 746 can be configured to change the position of the support 752 and the anvil 102 relative to one another. The first section 748 can comprise a bore 754 configured to receive a shaft portion 758 of the second section 750. The shaft portion 758 can slide within the bore 754 such that the position of the support 752 can change with respect to the anvil 102. For example, a linear force can be applied to the second section 750, and the second section 750 can slide within the bore 754 in the first section 746 such that a distance, d₁, between the support 752 and the first anvil end 102a decreases. Upon release of the linear force and/or application of a linear force in an opposite direction, the second section 750 can slide in an opposite direction within the bore 754 in the first section 746 such that the distance, d₁, between the support 752 and the first anvil end 102a increases. Thus, the second section 750 can move independently of the first section 748. In various non-limiting embodiments, the shaft portion 758 can comprise a bolt extending through a bore 760 in the second section 750 and through the bore 754.

The third section 766 can comprise a bore 768 configured to receive the shaft portion 758 of the second section 750. The shaft portion 758 can slide through the bore 768. The third section 766 can move independently of the first section 748 and the second section 750. A fastener 780 can couple the anvil 102 to the third section 766, such that the position of the anvil 102 relative to the sleeve 104 can be controlled by the movement of the first section 748 and the third section 766 relative to one another.

The first section 748 can comprise a first handle region 764 and the third section 766 can comprise a second handle region 762. In various non-limiting embodiments, a spring 770 can be disposed intermediate and in mechanical communication with the first handle region 764 and the second handle region 762 to urge the first handle region 764 and the second handle region 762 away from each other. In various other non-limiting embodiments, a piston, an actuator, or other device can be used in place of the spring 770 to urge the first handle region 764 and the second handle region 762 away from each other and/or other control the position of the first handle region 764 and the second handle region 762 relative to one another.

The first section 748 can be pivotally coupled to the third section 766 at a pivot 772. In the resting configuration, the first handle region 764 and the second handle region 762 can be urged away from each other by the spring 770 thereby pivoting a first actuating end 774 of the first section 748 and a second actuating end 776 of the third section 766 towards one another. In the resting configuration, the anvil 102 can be extended from the sleeve 104 in the open configuration, such that the distance, d₁, is decreased compared to a compressed configuration of the first handle region 764 and the second handle region 762.

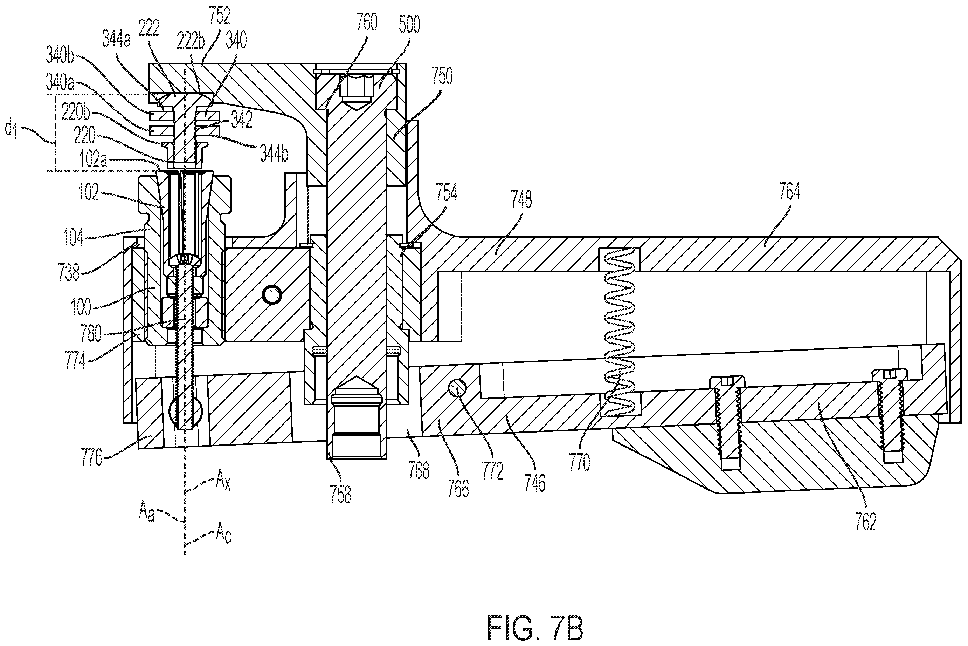

When the first handle region 764 and the second handle region 762 are moved towards each other to the compressed configuration shown in FIG. 7B, the anvil 102 can be retracted within the sleeve 104 and the distance, d₁, can increase compared to the resting configuration, which can facilitate positioning of the fastening system installation apparatus 700 to engage a fastening collar 220 of the fastening system 200. In various non-limiting embodiments, an operator can squeeze together the first handle region 764 and the second handle region 762 together by hand to overcome the force of the spring 770 and urge the first handle region 764 and the second handle region 762 towards one another. In various alternative non-limiting embodiments, a powered device (e.g., an automated powered device) can control the position of the first handle region 764 and the second handle region 762 relative to one another. Thereafter, the first anvil end 102a of the anvil 102 can be aligned with the fastening collar 220.

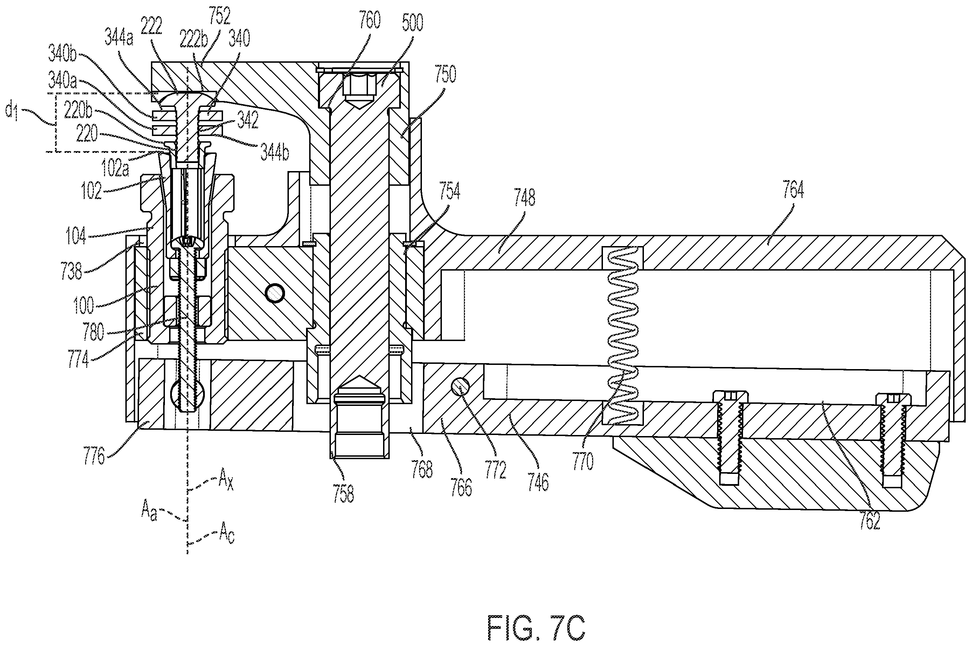

Referring to FIG. 7C, after alignment with the fastening collar 220, the operator and/or powered device can release the force on the first handle region 764 and the second handle region 762, thereby allowing the spring 770 to urge the first handle region 764 and the second handle region 762 away from one another and into the resting configuration. In FIG. 7C, the anvil 102 is shown extended from the sleeve 104 in the open configuration of the anvil 102 and engaged with the fastening collar 220 of the fastening system 200. For example, the force applied by spring 770 can place the anvil 102 in the open configuration and ensure a desired amount of contact between the fastening collar 202 and anvil 102 is achieved prior to application of an installation force to the fastening collar 202.

As illustrated in FIG. 7C, the first section 748 and the second section 750 can be moved relative to one another, thereby urging the support 752 and the sleeve 104 towards one another, and thereby moving the anvil 102 towards the support 752. In various non-limiting embodiments, the movement of the first section 748 and the second section 750 can be caused by retraction of a piston of an installation tool attached to the fastening system installation apparatus 700. As illustrated in FIG. 7C, the third section 766 can be moved by the fastener 780 due to the movement of the anvil 102.

A first force (e.g., axial force) can be applied to the fastening collar 220 in a direction substantially aligned with the longitudinal axis, A_{c}, of the fastening collar 220 utilizing the first anvil end 102a. The first force applied to the fastening system 200 can urge the first layer 340a towards the second layer 340b. For example, the first force can urge the first and second layers, 340a and 340b, of a structure 340 into contact with one another.

Utilizing the support 752 of the second section 750, a pin force can be applied to the second pin end 222b of the pin 222 on a first side 344a of the structure 340. The fastening collar 220 can be positioned in contact with a second side 344b of the structure 340. The second side 344b can be disposed opposite the first side 344a of the structure. In various non-limiting embodiments, retracting the piston of the installation tool can decrease the distance, d₁, between the support 752 and the anvil 102, thereby clamping on the structure 340 and/or the fastening system 200. Thus, the second pin end 222b can be urged toward the second collar end 220b.

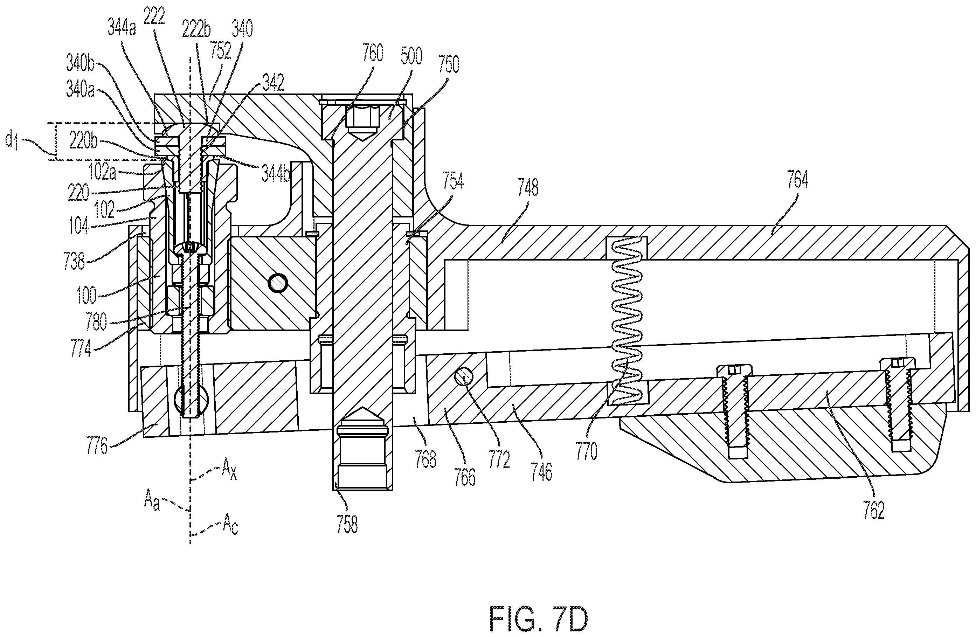

Clamping the structure 340 and/or the fastening system 200 together can forcibly contact the first anvil end 102a with the fastening collar 220 and can urge the anvil 102 to change from an open configuration to a closed configuration (as described herein), urging the anvil 102 to apply a second force (e.g., radial force) to the fastening collar 220, as shown in FIG. 7D. As illustrated in FIG. 7D, the third section 766 can be moved by the fastener 780 due to the movement of the anvil 102. The second force can be applied to the fastening collar 220 in a direction substantially perpendicular to the longitudinal axis, A_{c}, of the fastening collar 220 utilizing the first anvil end 102a. However, the second force can apply radial contact pressure that is less than the yield strength of the fastening collar 220 such that the fastening collar 220 may not deform, or minimally deforms, during application of the second force. In various non-limiting embodiments, a time during which the first force is being applied to the fastening collar 220 at least partially overlaps with a time during which the second force is being applied to the fastening collar 220. The overlap in time can enable the first force to reduce gaps between the structure 340 and fastening system 200 prior to deformation of the fastening collar 220 such that a desirable clamping force can be achieved.

Continuing the retraction of the piston of the installation tool can apply a third force (e.g., radial force) to the fastening collar 220 in a direction substantially perpendicular to the longitudinal axis, A_{c}, of the fastening collar 220 utilizing the first anvil end 102a. The third force can apply radial contact pressure that exceeds a yield strength of the fastening collar 220. Thus, the fastening collar 220 can be deformed onto the pin 222 of the fastening system 200 and secured to the structure 340. In various non-limiting embodiments wherein the shank 228 of the pin 222 comprises a thread, a groove, an annular shoulder, or a combination thereof, the fastening collar 220 can be deformed onto the thread, the groove, the annular shoulder, or the combination thereof of the shank 228. Application of the third force can elongate the pin 222 and further urge the first and second layers 340a and 340b of the structure 340 into contact with one another, which can achieve a desired clamping force between the first and second layers 340a and 340b.

The first, second, and third pin forces can be applied by a single stroke of the piston of the installation tool. For example, as the piston initially retracts at a first force level, the first and second pin forces can be applied to the structure 340 and/or fastening system 200. In various non-limiting embodiments, when gaps between the components of the structure 340 and/or the fastening system 200 decrease, the first force level can increase until the third force can be applied to the fastening collar 220 thereby securing the fastening system 200 to the structure 340.

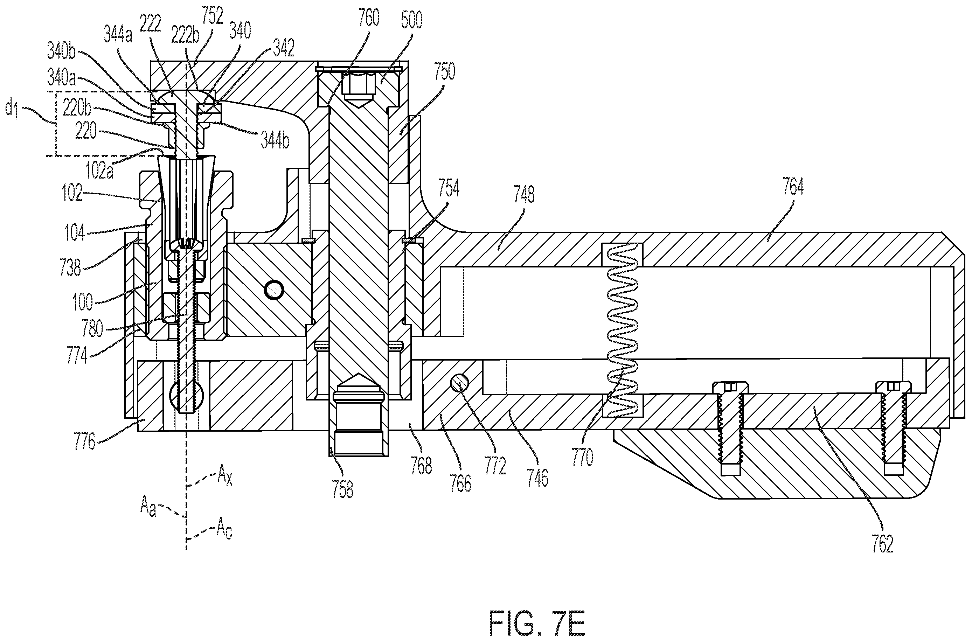

Referring to FIG. 7E, the piston of the installation tool can be extended to thereby expand the distance, d₁, between the support 752 and the anvil 102 such that the anvil 102 can be removed from the deformed fastening collar 220. The third force can form ribs (not shown in FIG. 7E) on the fastening collar 220.

One skilled in the art will recognize that other fastening installation apparatuses falling within the scope of the claims can be encompassed.

## Claims

1. A fastening system installation apparatus (100) comprising:
a sleeve (104) comprising
a first sleeve end (104a), wherein a sleeve cavity (104c) extends into the sleeve from the first sleeve end, and
a second sleeve end (104b); and
an anvil (102) slidably received by the sleeve cavity, the anvil comprising
a first anvil end (102a),
a second anvil end (102b), and
at least two portions (110a-110f) formed by at least two channels (112a-112f) extending from the first anvil end,
wherein in an open configuration of the anvil, each of the at least two portions comprises an outward taper relative to a longitudinal axis (Aₐ) of the anvil and an inner surface (114a-114f) facing inwardly relative to the longitudinal axis of the anvil,
wherein the at least two portions define an anvil cavity (102c) configured to receive a fastening collar and each of the inner surfaces is substantially smooth and capable of applying substantially even pressure to the fastening collar and is configured to deform the fastening collar,
wherein the sleeve is configured to radially displace the at least two portions inward relative to the longitudinal axis responsive to forcible contact between the first anvil end and the first sleeve end.

2. The fastening system installation apparatus (100) of claim 1, wherein the anvil (102) comprises at least three portions (110a-110f) formed by at least three channels (112a-112f) extending from the first anvil end (102a),
preferably wherein the at least three portions are circumferentially spaced around the longitudinal axis (Aₐ) of the anvil,
more preferably wherein the channels are aligned with the longitudinal axis of the anvil.

3. The fastening system installation apparatus (100) of claim 1 or claim 2, wherein:
the anvil (102) further comprises a tapered outer surface (116a-116f) disposed on the first anvil end (102a);
the sleeve (104) further comprises a tapered inner surface (108) disposed on the first sleeve end (104a); and
the tapered outer surface is configured to forcibly contact the tapered inner surface of the sleeve,
preferably wherein the tapered outer surface defines an angle in a range of 2 degrees to 40 degrees relative to the longitudinal axis (Aₐ) of the anvil.

4. The fastening system installation apparatus (100) of any one of claims 1 to 3, wherein the anvil (102) is a single continuous piece.

5. The fastening system installation apparatus (100) of any one of claims 1 to 3, wherein each of the portions (110a-110f) of the anvil (102) is a separate piece.

6. The fastening system installation apparatus (100) of any one of claims 1 to 5, further comprising:
a housing (446) comprising
a first section (448) operatively coupled to the anvil (102), and
a second section (450), wherein the first section is configured to slidably receive at least a portion of the second section, the second section comprising a support (452) defining an axis (Aₓ) substantially aligned with the longitudinal axis of the anvil,
wherein the housing is configured to change the position of the support relative to the anvil.

7. The fastening system installation apparatus (100) of claim 6, wherein the second section (450) is substantially J-shaped, and/or wherein at least one of the first section (448) and the second section is configured to engage and be driven by a tool.

8. A system comprising:
a fastening system installation apparatus according to claim 1; and
a fastening system (200), the fastening system comprising:
a fastening collar (220) comprising
a first collar end (220a),
a second collar end (220b), wherein a collar cavity (220c) extends from the first collar end to the second collar end; and
an elongate portion (224) disposed intermediate the first collar end and the second collar end, the elongate portion configured to have a rib (336) formed thereon responsive to a radial force applied thereto; and
a pin (222) configured to be at least partially received by the collar cavity, the pin comprising
a first pin end (222a),
a second pin end (222b), and
a shank (228) extending intermediate the first pin end and the second pin end,
wherein the fastening collar is configured to be deformed onto the shank responsive to the radial force.

9. The system of claim 8, wherein, when the fastening system (200) is installed in a structure, the shank (228) extends beyond the second collar end (220b) a first axial length no greater than 2 times a diameter of the shank.

10. The system of claim 8 or claim 9, wherein the shank (228) comprises at least one of a generally smooth region, an annular shoulder, a groove (234), and a threaded region.

11. The system of any one of claims 8 to 10, wherein the fastening collar (220) is generally cylindrical, and/or wherein the fastening collar comprises a flange (232).

12. The system of any one of claims 8 to 11, wherein the fastening system (200) is adapted to be installed in a bore in a structure, preferably wherein the structure is configured as an aerospace part or component, an automotive part or component, a transportation part or component, a building and construction part or component, or a combination thereof.

13. The system of any one of claims 8 to 12, wherein the fastening collar (220), the pin (222), or a combination thereof comprises a metal, a metal alloy, a composite, or a combination thereof.

14. The fastening system installation apparatus (100) of any one of claims 1 to 5, further comprising:
a housing (746) comprising
a first section (748) operatively coupled to the sleeve (104) and comprising a first handle region (764);
a second section (750), wherein the first section is configured to receive at least a portion of the second section, the second section comprising a support (752) moveable along an axis (Aₓ) substantially aligned with the longitudinal axis of the anvil (102); and
a third section (766) operatively coupled to the anvil, coupled to the first section, and comprising a second handle region (762), wherein the third section is configured to receive at least a portion of the second section;
wherein the housing is configured to selectively alter a position of the support relative to the anvil and a position of the anvil relative to the sleeve.

## Patentansprüche

1. Befestigungssystem-Installationsvorrichtung (100), umfassend:
eine Hülse (104), umfassend
ein erstes Hülsenende (104a), wobei sich ein Hülsenhohlraum (104c) von dem ersten Hülsenende in die Hülse erstreckt, und
ein zweites Hülsenende (104b); und
einen Amboss (102), der verschiebbar von dem Hülsenhohlraum aufgenommen wird, der Amboss umfassend
ein erstes Ambossende (102a),
ein zweites Ambossende (102b), und
mindestens zwei Abschnitte (110a-110f), die durch mindestens zwei Kanäle (112a-112f) gebildet werden, die sich von dem ersten Ambossende erstrecken,
wobei in einer offenen Konfiguration des Ambosses jeder der mindestens zwei Abschnitte eine nach außen verlaufende Verjüngung in Bezug auf eine Längsachse (Aₐ) des Ambosses und eine Innenfläche (114a-114f), die in Bezug auf die Längsachse des Ambosses nach innen weist, umfasst,
wobei die mindestens zwei Abschnitte einen Ambosshohlraum (102c) definieren, der so eingerichtet ist, dass er einen Befestigungskragen aufnimmt, und jede der Innenflächen im Wesentlichen glatt ist und einen im Wesentlichen gleichmäßigen Druck auf den Befestigungskragen ausüben kann und so eingerichtet ist, den Befestigungskragen zu verformen,
wobei die Hülse eingerichtet ist, die mindestens zwei Abschnitte in Bezug auf die Längsachse in Reaktion auf einen erzwungenen Kontakt zwischen dem ersten Ambossende und dem ersten Hülsenende radial nach innen zu verschieben.

2. Befestigungssystem-Installationsvorrichtung (100) nach Anspruch 1, wobei der Amboss (102) mindestens drei Abschnitte (110a-110f) umfasst, die durch mindestens drei Kanäle (112a-112f) gebildet sind, die sich von dem ersten Ambossende (102a) erstrecken,
bevorzugt, wobei die mindestens drei Abschnitte in Umfangsrichtung um die Längsachse (Aₐ) des Ambosses beabstandet sind,
besonders bevorzugt, wobei die Kanäle mit der Längsachse des Ambosses ausgerichtet sind.

3. Befestigungssystem-Installationsvorrichtung (100) nach Anspruch 1 oder Anspruch 2, wobei:
der Amboss (102) ferner eine sich verjüngende Außenfläche (116a-116f) umfasst, die auf dem ersten Ambossende (102a) angeordnet ist;
die Hülse (104) ferner eine sich verjüngende Innenfläche (108) umfasst, die auf dem ersten Hülsenende (104a) angeordnet ist; und
die sich verjüngende Außenfläche so eingerichtet ist, dass sie die sich verjüngende Innenfläche der Hülse zwangsweise berührt,
vorzugsweise wobei die sich verjüngende Außenfläche einen Winkel in einem Bereich von 2 Grad bis 40 Grad in Bezug auf die Längsachse (Aₐ) des Ambosses definiert.

4. Befestigungssystem-Installationsvorrichtung (100) nach einem der Ansprüche 1 bis 3, wobei der Amboss (102) ein einzelnes durchgängiges Stück ist.

5. Befestigungssystem-Installationsvorrichtung (100) nach einem der Ansprüche 1 bis 3, wobei jeder der Abschnitte (110a-110f) des Ambosses (102) ein separates Stück ist.

6. Befestigungssystem-Installationsvorrichtung (100) nach einem der Ansprüche 1 bis 5, ferner umfassend:
ein Gehäuse (446), umfassend
einen ersten Bereich (448), der operativ mit dem Amboss (102) gekoppelt ist, und
einen zweiten Bereich (450), wobei der erste Bereich so eingerichtet ist, dass er mindestens einen Abschnitt des zweiten Bereichs verschiebbar aufnimmt, wobei der zweite Bereich einen Träger (452) umfasst, der eine Achse (Aₓ) definiert, die im Wesentlichen mit der Längsachse des Ambosses ausgerichtet ist,
wobei das Gehäuse so eingerichtet ist, dass es die Position des Trägers in Bezug auf den Amboss ändert.

7. Befestigungssystem-Installationsvorrichtung (100) nach Anspruch 6, wobei der zweite Bereich (450) im Wesentlichen J-förmig ist, und/oder wobei mindestens einer von dem ersten Bereich (448) und dem zweiten Bereich eingerichtet ist, mit einem Werkzeug in Eingriff zu kommen und von diesem angetrieben zu werden.

8. System, umfassend:
eine Befestigungssystem-Installationsvorrichtung nach Anspruch 1; und
ein Befestigungssystem (200), das Befestigungssystem umfassend:
einen Befestigungskragen (220), umfassend
ein erstes Kragenende (220a),
ein zweites Kragenende (220b), wobei sich ein Kragenhohlraum (220c) von dem ersten Kragenende zu dem zweiten Kragenende erstreckt; und
einen länglichen Abschnitt (224), der zwischen dem ersten Kragenende und dem zweiten Kragenende angeordnet ist, wobei der längliche Abschnitt eingerichtet ist, eine Rippe (336) darauf auszubilden, in Reaktion auf eine darauf ausgeübte radiale Kraft; und
einen Stift (222), der so eingerichtet ist, dass er zumindest teilweise von dem Kragenhohlraum aufgenommen wird, der Stift umfassend
ein erstes Stiftende (222a),
ein zweites Stiftende (222b), und
einen Schaft (228), der sich zwischen dem ersten Stiftende und dem zweiten Stiftende erstreckt,
wobei der Befestigungskragen so eingerichtet ist, dass er in Reaktion auf die radiale Kraft auf den Schaft verformt wird.

9. System nach Anspruch 8, wobei, wenn das Befestigungssystem (200) in einer Struktur installiert ist, sich der Schaft (228) über das zweite Kragenende (220b) hinaus über eine erste axiale Länge erstreckt, die nicht größer als das Zweifache eines Durchmessers des Schafts ist.

10. System nach Anspruch 8 oder Anspruch 9, wobei der Schaft (228) zumindest eines von einem im Allgemeinen glatten Bereich, einer ringförmigen Schulter (234), einer Nut und einem Gewindebereich umfasst.

11. System nach einem der Ansprüche 8 bis 10, wobei der Befestigungskragen (220) im Allgemeinen zylindrisch ist und/oder wobei der Befestigungskragen einen Flansch (232) umfasst.

12. System nach einem der Ansprüche 8 bis 11, wobei das Befestigungssystem (200) dazu ausgestaltet ist, in einer Bohrung in einer Struktur installiert zu werden, bevorzugt wobei die Struktur als ein Luft- und Raumfahrtteil oder -bauteil, ein Kraftfahrzeugteil oder -bauteil, ein Transportteil oder -bauteil oder ein Bauvorrichtungsteil oder -bauteil konfiguriert ist.

13. System nach einem der Ansprüche 8 bis 12, wobei der Befestigungskragen (220), der Stift (222) oder eine Kombination davon ein Metall, eine Metalllegierung, einen Verbundstoff oder eine Kombination davon umfasst.

14. Befestigungssystem-Installationsvorrichtung (100) nach einem der Ansprüche 1 bis 5, ferner umfassend:
ein Gehäuse (746), umfassend
einen ersten Bereich (748), der mit der Hülse (104) operativ gekoppelt ist und eine erste Griffregion (764) umfasst;
einen zweiten Bereich (750), wobei der erste Bereich so eingerichtet ist, dass er mindestens einen Abschnitt des zweiten Bereichs aufnimmt, wobei der zweite Bereich einen Träger (752) umfasst, der entlang einer Achse (Aₓ) bewegbar ist, die im Wesentlichen mit der Längsachse des Ambosses (102) ausgerichtet ist; und
einen dritten Bereich (766), der mit dem Amboss operativ gekoppelt ist, mit dem ersten Bereich gekoppelt ist und eine zweite Griffregion (762) umfasst, wobei der dritte Bereich eingerichtet ist, mindestens einen Abschnitt des zweiten Bereichs aufzunehmen;
wobei das Gehäuse so eingerichtet ist, dass es eine Position des Trägers in Bezug auf den Amboss und eine Position des Amboss in Bezug auf die Hülse selektiv ändert.

## Revendications

1. Appareil d'installation de système de fixation (100) comprenant :
un manchon (104) comprenant
une première extrémité de manchon (104a), dans lequel une cavité de manchon (104c) s'étend jusque dans le manchon à partir de la première extrémité de manchon, et
une deuxième extrémité de manchon (104b) ; et
une enclume (102) reçue de manière coulissante par la cavité de manchon, l'enclume comprenant
une première extrémité d'enclume (102a),
une deuxième extrémité d'enclume (102b), et
au moins deux portions (110a-110f) formées par au moins deux canaux (112a-112f) s'étendant depuis la première extrémité d'enclume,
dans lequel, dans une configuration ouverte de l'enclume, chacune des au moins deux portions comprend une conicité vers l'extérieur par rapport à un axe longitudinal (Aₐ) de l'enclume et une surface intérieure (114a-114f) tournée vers l'intérieur par rapport à l'axe longitudinal de l'enclume,
dans lequel les au moins deux portions définissent une cavité d'enclume (102c) configurée pour recevoir un collier de fixation et chacune des surfaces intérieures est sensiblement lisse et capable d'appliquer une pression sensiblement uniforme au collier de fixation et est configurée pour déformer le collier de fixation,
dans lequel le manchon est configuré pour déplacer radialement les au moins deux portions vers l'intérieur par rapport à l'axe longitudinal en réponse à un contact forcé entre la première extrémité d'enclume et la première extrémité de manchon.

2. Appareil d'installation de système de fixation (100) selon la revendication 1, dans lequel l'enclume (102) comprend au moins trois portions (110a-110f) formées par au moins trois canaux (112a-112f) s'étendant à partir de la première extrémité d'enclume (102a),
dans lequel les au moins trois portions sont de préférence espacées de manière circonférentielle autour de l'axe longitudinal (Aₐ) de l'enclume,
de manière davantage préférée, dans lequel, les canaux sont alignés avec l'axe longitudinal de l'enclume.

3. Appareil d'installation de système de fixation (100) selon la revendication 1 ou la revendication 2, dans lequel :
l'enclume (102) comprend en outre une surface extérieure conique (116a-116f) disposée sur la première extrémité d'enclume (102a) ;
le manchon (104) comprend en outre une surface intérieure conique (108) disposée sur la première extrémité de manchon (104a) ; et
la surface extérieure conique est configurée pour entrer en contact de force avec la surface intérieure conique du manchon,
de préférence, dans lequel la surface extérieure conique définit un angle dans une plage de 2 degrés à 40 degrés par rapport à l'axe longitudinal (Aₐ) de l'enclume.

4. Appareil d'installation de système de fixation (100) selon l'une quelconque des revendications 1 à 3, dans lequel l'enclume (102) est une pièce continue unique.

5. Appareil d'installation de système de fixation (100) selon l'une quelconque des revendications 1 à 3, dans lequel chacune des portions (110a-110f) de l'enclume (102) est une pièce séparée.

6. Appareil d'installation de système de fixation (100) selon l'une quelconque des revendications 1 à 5, comprenant en outre :
un logement (446) comprenant
une première section (448) couplée de manière fonctionnelle à l'enclume (102), et
une deuxième section (450), dans lequel la première section est configurée pour recevoir de manière coulissante au moins une portion de la deuxième section, la deuxième section comprenant un support (452) définissant un axe (Aₓ) sensiblement aligné avec l'axe longitudinal de l'enclume,
dans lequel le logement est configuré pour changer la position du support par rapport à l'enclume.

7. Appareil d'installation de système de fixation (100) selon la revendication 6, dans lequel la deuxième section (450) est sensiblement en forme de J, et/ou dans lequel l'au moins une parmi la première section (448) et la deuxième section est configurée pour venir en prise avec et être entraînée par un outil.

8. Système comprenant :
un appareil d'installation de système de fixation selon la revendication 1 ; et
un système de fixation (200), le système de fixation comprenant :
un collier de fixation (220) comprenant
une première extrémité de collier (220a),
dans lequel une deuxième extrémité (220b), dans lequel une cavité de collier (220c) s'étend de la première extrémité de collier à la deuxième extrémité de collier ; et
une portion allongée (224) disposée entre la première extrémité de collier et la deuxième extrémité de collier, la portion allongée étant configurée pour avoir une nervure (336) formée sur celle-ci en réponse à une force radiale appliquée à celle-ci ; et
une broche (222) configurée pour être au moins partiellement reçue par la cavité du collier, la broche comprenant
une première extrémité de broche (222a),
une deuxième extrémité de broche (222b), et
une tige (228) s'étendant entre la première extrémité de broche et la deuxième extrémité de broche,
dans lequel le collier de fixation est configuré pour être déformé sur la tige en réponse à la force radiale.

9. Système selon la revendication 8, dans lequel, lorsque le système de fixation (200) est installé dans une structure, la tige (228) s'étend au-delà de la deuxième extrémité de collier (220b) sur une première longueur axiale non supérieure à 2 fois un diamètre de la tige.

10. Système selon la revendication 8 ou la revendication 9, dans lequel de préférence la tige (228) comprend l'au moins un parmi une région généralement lisse, un épaulement annulaire, une rainure (234) et une région filetée.

11. Système selon l'une quelconque des revendications 8 à 10, dans lequel le collier de fixation (220) est généralement cylindrique, et/ou dans lequel le collier de fixation comprend une bride (232).

12. Système selon l'une quelconque des revendications 8 à 11, dans lequel le système de fixation (200) est adapté pour être installé dans un alésage dans une structure, de préférence dans lequel la structure est configurée comme un élément ou composant aérospatial, un élément ou composant automobile, un élément ou composant de transport, un élément ou composant pour le bâtiment et la construction, ou une combinaison de ceux-ci.

13. Système selon l'une quelconque des revendications 8 à 12, dans lequel le collier de fixation (220), la broche (222) ou une combinaison de ceux-ci comprend un métal, un alliage métallique, un composite ou une combinaison de ceux-ci.

14. Appareil d'installation de système de fixation (100) selon l'une quelconque des revendications 1 à 5, comprenant en outre :
un logement (746) comprenant
une première section (748) couplée de manière fonctionnelle au manchon (104) et comprenant une première région de poignée (764) ;
une deuxième section (750), dans lequel la première section est configurée pour recevoir l'au moins une portion de la deuxième section, la deuxième section comprenant un support (752) mobile le long d'un axe (Aₓ) sensiblement aligné avec l'axe longitudinal de l'enclume (102) ; et
une troisième section (766) couplée de manière fonctionnelle à l'enclume, couplée à la première section, et comprenant une deuxième région de poignée (762), dans lequel la troisième section est configurée pour recevoir l'au moins une portion de la deuxième section ;
dans lequel le logement est configuré pour modifier sélectivement une position du support par rapport à l'enclume et une position de l'enclume par rapport au manchon.
